# EUROPEAN PATENT SPECIFICATION

(11) **EP 2 614 876 B1**
(45) Date of publication and mention of the grant of the patent: **29.03.2017**
(21) Application number: 13150666.9
(22) Date of filing: 09.01.2013
(51) Int. Cl.: B01D 53/50, B01D 53/68, B01D 53/75, B01D 53/83

(54) **High-temperature and high-pressure system for desulfurisation and dehalogenation of gas**
Hochtemperatur- und Hochdrucksystem zur Entschwefelung und Enthalogenierung von Gas
Système à haute pression et à haute température pour la désulfuration et déshalogènation de gaz

(30) Priority: 13.01.2012 KR 20120004452
(43) Date of publication of application: 17.07.2013
(73) Proprietor: Korea Institute of Energy Research, Daejon 305-343 (KR)
(72) Inventor: Yi, Chang-Keun, Daejeon 305-720 (KR); Park, Young Cheol, Daejeon 305-150 (KR); Jo, Sung-Ho, Daejeon 302-776 (KR); Ryu, Ho-Jung, Daejeon 305-308 (KR); Jin, Gyoung Tae, Daejeon 302-852 (KR); Shun, Dowon, Daejeon 305-811 (KR); Bae, Dal-Hee, Saejong 339-014 (KR); Park, Jaehyeon, Daejeon 305-753 (KR); Lee, Seung-Yong, Daejeon 305-721 (KR); Moon, Jong-ho, Seoul 138-931 (KR); Lee, Dong-Ho, Daejeon 302-182 (KR)
(74) Representative: Gevers & Orès

(56) References cited:
- EP-A1- 0 008 770
- EP-A2- 0 328 874
- US-A- 5 380 507
- US-A- 5 878 677

## Description

### 1. Field of the Invention

The present invention relates to a system for purifying high-temperature high-pressure contaminated gas, and more specifically to a system for purifying high-temperature high-pressure contaminated gas which includes a dehalogenation process for removing halogen compounds from a raw gas by reutilizing a dry carbon dioxide absorbent that has been exhausted by repeated removing of carbon dioxide.

### 2. Description of the Related Art

Recently coal gas is generated by gasifying solid fuel containing carbon such as solid fossil fuel, essential oil and industrial wastes (for example, petroleum coke, bottom residues, waste tires and solid wastes such as refuse-derived fuel (RDF)). Coal-gasified composite power generation, which is performed to produce electrical power, hydrogen, chemical raw materials, and transport fuel such as gasoline from such coal gas or synthetic gas, is being spotlighted.

At this time, gasified coal gas or synthetic gas contains various harmful substances such as sulfur compounds, nitrogen oxides, hydrogen chloride and cyan. Therefore, these harmful substances should be removed in order to produce electrical power, hydrogen, chemical raw materials and transport fuel such as gasoline.

Of these, the method for removing hydrogen chloride on an industrial scale has not yet been established, and methods as follows are known publicly.

As a method of removing by combustion, there is a method whereby hydrogen chloride is removed from combustion exhaust gas by raising combustion temperature to 1000°C or higher and thermally reacting the hydrogen chloride contained in the gas by high heat. However, because the combustion temperature is usually within the range of about 800°C to 900°C, it is necessary to remodel the combustion system to raise the temperature to 1000° or higher.

Further, as a removing method by adsorption, there is a method whereby hydrogen chloride contained in the combustion exhaust gas is adsorbed onto an adsorbent by passing gas through an adsorbent such as activated charcoal. However this method has a problem in that treatment is needed for recycling the adsorbent such as activated charcoal after adsorbing hydrogen chloride.

US 5 878 677 discloses a system for purifying contaminated gas, comprising a desulfurization apparatus which removes sulfur compounds from a raw gas and a dehalogenation apparatus which is disposed at the rear of the desulfurization apparatus to remove halogen compounds by contacting the gas with dry adsorbents.

Further, there is a method of removing hydrogen chloride in the gas by liquid solution. However this method requires additional treatment for removing the toxicity of the waste liquid that has been used for treating the chlorine.

As disclosed in Korean Patent Application No. 10-1992-0701055, there is a method of removing hydrogen chloride by catalytic contact. However this method has a problem that the catalyst is very expensive and an extra recycling apparatus should be provided to recycle the same.

### [SUMMARY OF THE INVENTION]

The present invention is to solve the above-mentioned problems with an object to provide a system for purifying high-temperature high-pressure contaminated gas which includes a dehalogenation process for removing halogen compounds from a raw gas by reutilizing a dry carbon dioxide absorbent that has been exhausted by repeated removing of carbon dioxide.

Another object of the present invention is to provide a system for purifying high-temperature high-pressure contaminated gas which can carry out the dehalogenation process successively by selectively connecting a plurality of dehalogenation reactors of the dehalogenation apparatus to a desulfurization apparatus.

In order to accomplish the foregoing objects, according to an aspect of the present invention, there is provided a system for purifying high-temperature high-pressure contaminated gas, including: a desulfurization apparatus which removes sulfur compounds from a raw gas; and a dehalogenation apparatus which is disposed at the rear of the desulfurization apparatus to remove halogen compounds, wherein the dehalogenation apparatus includes a dehalogenation reactor into which a dry carbon dioxide absorbent is introduced, and a dehalogenation cyclone which separates the dry carbon dioxide absorbent from a mixture of a dehalogenation gas and the dry carbon dioxide absorbent discharged from the dehalogenation reactor and discharges only the dehalogenation gas.

When the dehalogenation apparatus is disposed at a front of the desulfurization apparatus, a preheater is installed between the dehalogenation apparatus and the desulfurization apparatus.

In addition, the dry carbon dioxide absorbent may include a dry carbon dioxide absorbent that has been exhausted in the dry carbon dioxide removing apparatus. Therefore, it is possible to save resources by reutilizing a waste dry absorbent that does not adsorb the carbon dioxide any more.

Particularly, since the dry carbon dioxide absorbent can not be regenerated after the dehalogenation process, at least two dehalogenation reactors of the dehalogenation apparatus are selectively connected to the desulfurization apparatus, thereby it is possible to replace the dry carbon dioxide absorbent in one dehalogenation reactor which is not connected to the desulfurization apparatus, while the dehalogenation process is continuously carried out in the other desulfurization reactor which is connected to the desulfurization apparatus.

According to the present invention, it is possible to remove halogen compounds from a raw gas by reutilizing a dry carbon dioxide absorbent that has been exhausted by repeated removing of carbon dioxide. Therefore, it is not necessary to additionally prepare an absorbent for removing hydrogen chloride since waste obtained from the carbon dioxide collection device can be used. Further, it is not necessary to consider the regenerating of absorbent after removing hydrogen chloride, and since the recycling apparatus can be omitted, it is very economical in terms of cost.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a schematic view illustrating a system for purifying high-temperature high-pressure contaminated gas according to a first embodiment of the present invention; and
FIG. 2 is a schematic view illustrating a system for purifying high-temperature high-pressure contaminated gas according to a second embodiment which is not part of the present invention.

### [DETAILED DESCRIPTION OF THE INVENTION]

Hereinafter, preferable embodiments of the present invention will be described with reference to the accompanying drawings. Referring to the drawings, wherein like reference characters designate like or corresponding parts throughout the several views. In the embodiments of the present invention, detailed description of the publicly known functions and configurations that are judged to be able to make the purport of the present invention unnecessarily obscure are omitted.

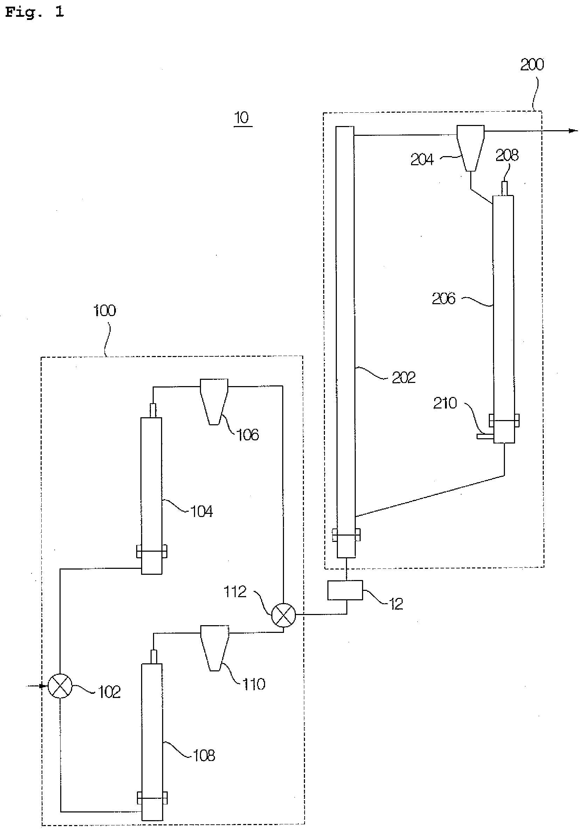

FIG. 1 illustrates a system for purifying high-temperature high-pressure contaminated gas (hereinafter also referred to as a "gas clean-up system") 10 according to a first embodiment of the present invention. The contaminated gas purification system 10 generally includes a desulfurization apparatus 200 and a dehalogenation apparatus 100 disposed at the front of the desulfurization apparatus 200.

The desulfurization apparatus 200 is publicly known in the technical field to which the present invention pertains, and generally includes a desulfurization reactor 202, a regeneration reactor 206 and a desulfurization cyclone 204 which separates a solid sorbents containing a sulfur component absorbed therein and a remaining gas. The desulfurization reactor 202 may be a publicly known fluidized-bed reactor. The solid desulfurizer flows in the desulfurization reactor 202 due to the rising pressure and flow of a raw gas. Thereby, the contact frequency of solid desulfurizer and raw gas increases. Meanwhile, the inside of the desulfurization reactor 202 should maintain a desulfurization temperature of 450 to 500°C. But considering that the reaction temperature in the dehalogenation apparatus 100 is 350 to 400°C, the temperature of the gas introduced into the desulfurization apparatus 200 should be raised. For this, a preheater 12 is disposed between the dehalogenation apparatus 100 and the desulfurization apparatus 200.

A dispersion plate (not shown) installed on the inner lower section of the desulfurization reactor 202 lets the raw gas be distributed uniformly across the whole of the dispersion plate while preventing the inflow of raw gas from being obstructed by a solid desulfurizer. Therefore, it is possible to increase the contact rate between the solid desulfurizer and the raw gas.

As the solid sorbents, a solid type zinc oxide sorbents is used, and such a solid type zinc oxide sorbents may use the one in the public domain as disclosed in Korean Patent Publication No. 10-2003-0035441. Therefore, a detailed description thereof will be omitted in the present invention.

In addition, the desulfurization cyclone 204 is disposed at the upper side of the desulfurization reactor 202 so as to separate the solid sorbents from a mixed gas of the solid sorbents containing sulfur compounds absorbed therein and the remaining gas. When the mixed gas is introduced into the desulfurization cyclone 204, the desulfurization cyclone 204 forms a circling flow inside so as to cause the heavy solid sorbents to fall down by self-weight and discharge the remaining gas.

The solid sorbents separated from the desulfurization cyclone 204 is introduced into the upper section of the regeneration reactor 206. Meanwhile, a regeneration gas inlet port 210 is formed at the lower portion of the regeneration reactor 206. The regenerated gas introduced into the regeneration gas inlet port 210 is uniformly distributed in the regeneration reactor 206 through a dispersion plate (not shown) formed on the lower section of the regeneration reactor 206. At this time, gaseous sulfur dioxide is generated from the solid sorbents through contact between the regenerated gas and the solid sorbents. The generated sulfur dioxide gas is supplied to an apparatus connected thereto for another process through a sulfur dioxide outlet port 208 formed at the top end of the regeneration reactor 206.

The regenerated gas is an oxidative gas and may use the air in the atmosphere, for example.

The solid sorbents regenerated by regenerated gas is supplied to the desulfurization reactor 202 again from the regeneration reactor 206. Here, the regenerating process of the solid sorbents by regenerated gas is achieved by exothermic reaction. Accordingly, the inside temperature of the regeneration reactor 206 rises, so in the conventional art the regeneration reactor 206 is cooled using an extra cooling apparatus.

The dehalogenation apparatus 100 includes dehalogenation reactors 104 and 108 into which a dry carbon dioxide sorbents is introduced and dehalogenation cyclones 106 and 110 which separate the dry carbon dioxide sorbents from a mixture of a dehalogenation gas and the dry carbon dioxide sorbents discharged from the dehalogenation reactors 104 and 108 and discharges only the dehalogenation gas.

As described above, in the case that the dehalogenation apparatus 100 is disposed at the front of the desulfurization apparatus, the preheater 12 is installed between the dehalogenation apparatus 100 and the desulfurization apparatus 200.

In addition, as the dry carbon dioxide sorbents, the dry carbon dioxide sorbents that has been exhausted in the dry carbon dioxide removing apparatus is used. At this time, K₂CO₃ can be used as the dry carbon dioxide sorbents. If the dry carbon dioxide sorbents is used continuously for a long period, the sorption ability of the carbon dioxide is lowered. Such waste dry sorbents is introduced in the dehalogenation reactors 104 and 108 to be used as a dehalogenation dry sorbents.

However, because reutilizing is impossible if the dry carbon dioxide absorbent absorbs halogen compounds, the dry carbon dioxide absorbent should be disposed of after using it for a certain period. Accordingly, in the present invention a plurality of dehalogenation reactors 104 and 108 are used to maintain the continuity of the dehalogenation process. At this time, it is possible to use a plurality of dehalogenation cyclones 106 and 110, as well as to use one dehalogenation cyclone which is connected to one of the two dehalogenation reactors by turns.

In the first embodiment of the present invention, the plurality of dehalogenation reactors 104 and 108 and the plurality of dehalogenation cyclones 106 and 110 are used. For a continuous dehalogenation process, an inflow change valve 102 is installed between the dehalogenation reactors 104 and 108 and an outflow change valve 112 is installed between the dehalogenation cyclones 106 and 110. Inlet ports of the outflow change valve 112 are selectively connected to outlet ports of the dehalogenation cyclones 106 and 110 and an outlet port of the outflow change valve 112 is connected to an inlet port of the preheater 12.

In addition, an inlet port of the inflow change valve 102 is connected to a raw gas supply source (not shown) and outlet ports of the inflow change valve 102 are selectively connected to inlet ports of the dehalogenation reactors 104 and 108.

Therefore, by changing the flow channel by the inflow change valve 102 and the outflow change valve 112, it is possible to replace the dry carbon dioxide sorbents in one of the dehalogenation reactors 104 and 108 which is not connected to the desulfurization apparatus 200, while the dehalogenation process is continuously carried out in the other desulfurization reactor 104 or 108 which is connected to the desulfurization apparatus 200.

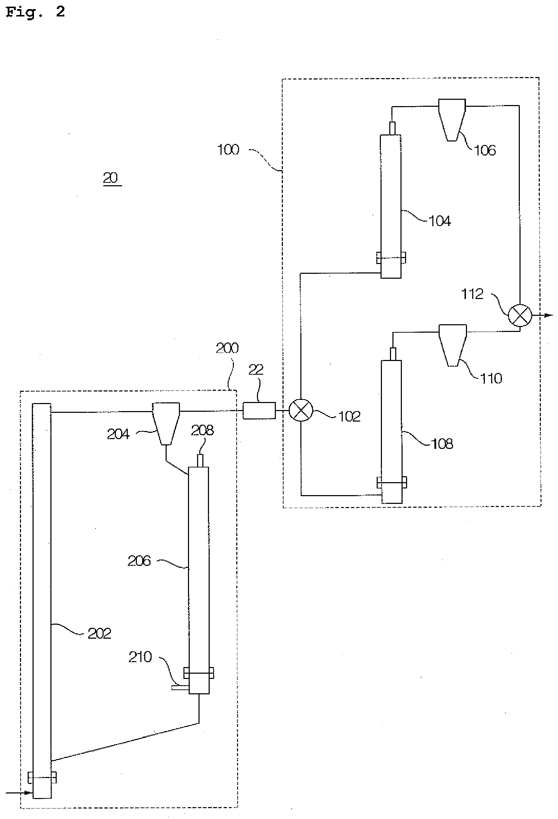

Next, a gas clean-up system according to a second embodiment which is not part the present invention will be described with reference to FIG. 2. FIG. 2 illustrates a system for purifying high-temperature high-pressure contaminated gas 20 according to the second embodiment. The gas clean-up system 20 includes a desulfurization system 200 and a dehalogenation apparatus 100 disposed at the rear of the desulfurization apparatus 200. Compared with the gas clean-up system 10 of the first embodiment, the gas clean-up system 20 according to the second embodiment is different in that the locations of the desulfurization apparatus 200 and the dehalogenation apparatus 100 are changed with each other.

Accordingly, contrary to the first embodiment, the temperature of the gas discharged from the desulfurization apparatus 200 ranges from 450 to 500°C, so the temperature of the gas should be lowered considering that the reaction is carried out at a temperature of 350 to 400°C in the dehalogenation apparatus 100. For lowering the temperature of the gas discharged from the desulfurization apparatus 200, a cooler 22 is installed between the desulfurization apparatus 200 and the dehalogenation apparatus 100.

Therefore, it is possible to manufacture and use the gas clean-up system 10 and 20 of the first embodiment and the second embodiment by suitably selecting according to the design objectives and design circumstances.

### * Explanation of Reference Numerals of Main Parts of the Drawings

10, 20: system for purifying high-temperature high-pressure contaminated gas, 12: preheater,
22: cooler, 100: dehalogenation apparatus
102: inflow change valve, 104, 108: dehalogenation reactor
106, 110: dehalogenation cyclone, 112: outflow change valve
200: desulfurization apparatus, 202: desulfurization reactor
204: desulfurization cyclone, 206: regeneration reactor
208: sulfur dioxide outlet port, 210: regeneration gas inlet port

## Claims

1. A system for purifying high-temperature high-pressure contaminated gas, comprising:
a desulfurization apparatus which removes sulfur compounds from a raw gas; and
a dehalogenation apparatus which is disposed at a front of the desulfurization apparatus to remove halogen compounds,
wherein the dehalogenation apparatus comprises a dehalogenation reactor into which a dry carbon dioxide sorbents that has been exhausted in the dry carbon dioxide removing apparatus is introduced, and a dehalogenation cyclone which separates the dry carbon dioxide sorbents from a mixture of a dehalogenated gas and the dry carbon dioxide sorbents discharged from the dehalogenation reactor and discharges only the dehalogenated gas,
wherein the dehalogenation apparatus is disposed at la front of the desulfurization apparatus and a preheater is installed between the dehalogenation apparatus and the desulfurization apparatus.

2. The system according to claim 1, wherein at least two dehalogenation reactors of the dehalogenation apparatus are selectively connected to the desulfurization apparatus.

## Patentansprüche

1. System zur Reinigung von unter hoher Temperatur und hohem Druck stehendem kontaminiertem Gas, Folgendes umfassend:
eine Entschwefelungsvorrichtung, die Schwefelverbindungen aus einem Rohgas entfernt; und
eine Dehalogenierungsvorrichtung, die an einer Vorderseite der Entschwefelungsvorrichtung angeordnet ist, um Halogenverbindungen zu entfernen,
wobei die Dehalogenierungsvorrichtung einen Dehalogenierungsreaktor, in den ein Sorptionsmittel für trockenes Kohlendioxid, das in der Vorrichtung zur Entfernung von trockenem Kohlendioxid erschöpft wurde, eingebracht wird, und einen Dehalogenierungszyklon umfasst, der das Sorptionsmittel für trockenes Kohlendioxid aus einem Gemisch von einem dehalogenierten Gas und dem Sorptionsmittel für trockenes Kohlendioxid, das aus dem Dehalogenierungsreaktor abgelassen wurde, trennt und nur das dehalogenierte Gas ablässt,
wobei die Dehalogenierungsvorrichtung an einer Vorderseite der Entschwefelungsvorrichtung angeordnet ist und ein Vorerhitzer zwischen der Dehalogenierungsvorrichtung und der Entschwefelungsvorrichtung installiert ist.

2. System nach Anspruch 1, wobei mindestens zwei Dehalogenierungsreaktoren der Dehalogenierungsvorrichtung gezielt mit der Entschwefelungsvorrichtung verbunden werden.

## Revendications

1. Système pour la purification à haute température et à haute pression de gaz contaminé, comprenant :
un appareil de désulfuration qui élimine des composés sulfurés d'un gaz naturel brut ; et
un appareil de déshalogénation qui est disposé à un avant de l'appareil de désulfuration pour éliminer des composés halogénés,
dans lequel l'appareil de déshalogénation comprend un réacteur de déshalogénation à l'intérieur duquel un sorbant de dioxyde de carbone sec qui a été rejeté dans l'appareil d'élimination de dioxyde de carbone sec est introduit, et un cyclone de déshalogénation qui sépare les sorbants de dioxyde de carbone sec d'un mélange d'un gaz déshalogéné et les sorbants de dioxyde de carbone sec rejetés du réacteur de déshalogénation et ne rejette que le gaz déshalogéné,
dans lequel l'appareil de déshalogénation est disposé à un avant de l'appareil de désulfuration et un préchauffeur est installé entre l'appareil de déshalogénation et l'appareil de désulfuration.

2. Système selon la revendication 1, dans lequel au moins deux réacteurs de déshalogénation de l'appareil de déshalogénation sont reliés sélectivement à l'appareil de désulfuration.
